# EUROPEAN PATENT APPLICATION

(11) **EP 4 756 503 A1**
(43) Date of publication of application: **10.06.2026**
(21) Application number: 24217396.1
(22) Date of filing: 04.12.2024
(51) Int. Cl.: G02B 5/12, G02B 5/122, G02B 5/13, G02B 17/08

(54) **LOW-DISPERSION REFLECTOR**

(71) Applicant: Hexagon Innovation Hub GmbH, 9435 Heerbrugg (CH)
(72) Inventor: KIPFER, Peter, 9443 Widnau (CH); JENSEN, Thomas, 9400 Rorschach (CH)
(74) Representative: Kaminski Harmann

(57) **Abstract**

Retro-reflector (20) comprising a front boundary surface (22) configured for entry of measuring light (11) into the retro-reflector (20) and a back boundary surface (24) configured for reflecting the measuring light as reflected measuring light (12). The front boundary surface (22) and the back boundary surface (24) are arranged on opposite sides of the retro-reflector (20), and an optical axis (13) is defined by the arrangement of the front boundary surface (22) and/or the back boundary surface (24) of the retro-reflector (20), wherein an incidence angle of the measuring light (11) relative to the optical axis (13) is equal to an exit angle of the reflected measuring light (22) relative to the optical axis (13). A first optical element (21) is provided comprising the front boundary surface (22), and a second optical element (23) is provided comprising the back boundary surface (24). The front boundary surface (22) and the back boundary surface (24) are of curved shape, the first optical element (21) and the second optical element (23) are of different shape and/or size, the first optical element (21) is connected to the second optical element (23) and the retro-reflector (20) is configured so that the measuring light (11) entering into the retro-reflector (20) at the front boundary surface (22) is focussed at the back boundary surface (24).

## Description

The invention relates generally to a retro-reflector to provide accurate measuring of distances and positions of targets or target points by metrology systems and/or industrial surveying systems.

In metrology it is a general object to determine geometrical properties such as coordinates, distances, and orientations of one or more target objects relative to a metrology device, wherein in most instances those properties have to be determined with respect to a known reference system, e.g. defined by one or more known reference points.

Methods and systems for measuring target coordinates are used in many applications, e.g. very precise measurements in geodesic applications, measurement problems in the field of building installation, or for controlling industrial processes.

Metrology instruments that are designed for continuously tracking a target point and coordinatively determining the position of this point can generally be combined under the term tracker or laser tracker, particularly in connection with industrial metrology. In this case, a target point may be represented by a retro-reflective unit (e.g. corner cube prism) that is targeted using an optical measurement beam from the measuring instrument, particularly a laser beam. The laser beam is reflected back to the measuring apparatus in a parallel manner, the reflected beam being sensed using a sensing unit of the apparatus. In this context, an emission direction and a reception direction for the beam are ascertained, for example by means of sensors for angle measurement that are associated with a deflection mirror or a targeting unit of the system. In addition, with the sensing of the beam, a distance from the measuring apparatus to the target point is ascertained, e.g. by means of propagation time measurement or phase difference measurement.

In addition, laser trackers according to the prior art may be embodied with an optical image capture unit with a two dimensional, light-sensitive array, e.g. a CCD camera or a camera based on a CMOS array, or with a pixel array sensor and with an image processing unit. In this case, the laser tracker and the camera may be mounted in particular one on top of the other such that their positions relative to one another cannot be altered. Alternatively, the camera is arranged so as to be able to rotate together with the laser beam. The camera may be installed in an integrated design together with the laser optical system in a common housing.

With a capture and evaluation of an image - by means of an image capture and image processing unit - of what is known as an auxiliary measuring instrument (probe) with markings whose relative location with respect to one another is known, it is possible to deduce an orientation for the probe relative to the tracking unit. Together with the determined spatial position of the target point, it is thus possible to precisely determine the position and orientation of the object with six degrees of freedom (6DoF).

The probe can be embodied by what are known as a contact sensing tool or tactile probe that is positioned with its contact point on a point of an object to be measured. The contact sensing tool has markings, e.g. light points, and a retro-reflector, which represents a target point on the contact sensing tool and can be targeted using the laser beam from the tracker, the positions of the markings and of the reflector relative to the contact point of the contact sensing tool being precisely known. In a manner known to a person skilled in the art, the probe may also be a scanner, for example a handheld scanner, equipped for distance measurement for contactless surface surveying operations. The direction and position of the scanner measurement beam used for the distance measurement relative to the light points and reflectors that are arranged on the scanner are precisely known. Such a scanner is described in EP 0 553 266, for example.

For distance measurement, laser trackers in the prior art have at least one distance measuring device, said distance measuring device typically being in the form of a laser interferometer, for example. Due to comparatively long coherence length and the measurement range permitted thereby, the interferometers used for distance measurement primarily comprise helium neon gas lasers (HeNe lasers) as light sources. Such is known from WO 2007/079600 A1 or from WO 2010/148525 A1, for example.

For reflecting a measuring beam of a laser tracker, retro-reflectors as known in the art are typically either provided as solid glass retroreflector prisms or as hollow corner cube retroreflectors.

For solid glass prisms, measuring the 3D position of the triple point of the solid glass prism is dependent on a measuring angle due to refraction in the glass. High-precision measurements of absolute positions for industrial measurement tasks are therefore difficult to accomplish using solid glass prisms. Solid glass prisms are therefore typically only used for monitoring applications for which it is sufficient to perform measurements of relative position changes.

Hollow prisms used as retro-reflectors typically comprise three reflective surfaces, wherein incoming light is reflected back along the opposite direction with respect to an incoming direction. The reflection is in general provided through direct reflection at the three reflective surfaces of the hollow prism. An advantage of hollow prism retroreflectors over solid glass prism retroreflectors is that for hollow prism retro-reflectors the back-reflecting of incoming light is not influenced by refraction. On the other hand, this also limits the usable angular range (field of view, FOV) of hollow prisms compared to glass prisms. The three reflective surfaces need, however, to be precisely orientated with respect to one another in order to avoid dihedral angle errors. It is furthermore important that the three reflective surfaces have a high degree of planarity. Hollow retroreflectors are also known as corner-cube retroreflectors.

Typical reflectors of above have to provide highly precise arrangement of their components in order to provide precise retro-reflecting properties. Therefore, fabrication of such reflectors is related to comparatively great effort. Furthermore, due to their designs, such reflectors comprise comparatively complex structures and often high weight. Moreover, accuracy of such reflectors depends on (external) thermal conditions, since optical properties of the reflectors change with temperature.

Further, a typical drawback of retro-reflectors like hollow prisms known from prior art is a significant limitation of the acceptance angle, i.e. the angle under which measuring light can be received and can be retro-reflected with sufficient intensity for proper distance measurement.

For other retro-reflectors, like ball lenses, the spectral behavior has particular influence on their retro-reflection properties. As for example, a retro-reflector may provide perfect reflection conditions for measuring light having a wavelength of about 650 nm but reflection conditions become poor if the same reflector is used with measuring light of about 900 nm or even about 1500 nm.

It is therefore an object of the invention to provide a retro-reflector which provides accurate retro-reflecting properties while also providing improved structural setup, e.g. less complex.

A further object of the present invention is to provide a retro-reflector which provides more reliable measuring properties and a more flexible applicability.

These objects are achieved by the realisation of at least part of the characterising features of the independent claims. Features which further develop the invention in an alternative or advantageous manner can be found in some of the other features of the independent claims and in the dependent claims.

The invention relates to a new retro-reflector that can be used with the majority of laser trackers in the market. Current retro-reflectors are limited either in the acceptance angle range (e.g. +/- 30°), in the maximum measuring distance (e.g. 18 m) or in the wavelength range (e.g. 633 to 792 nm).

The present idea related to a retro-reflector that has a sufficient angular range (+/- 50°), a measuring distance of up to 50 m and can be used spectrally for all laser trackers (e.g. 633 nm to 1550 nm). The wavelength problem of optical systems is usually solved by replacing individual lenses with doublets (achromats) consisting of two lenses with different dispersion. This approach is comparatively complex in view of required space, weight and proper integration.

The idea of the present invention is to provide a design of a retro-reflector with curved front and curved back surfaces to provide general retro-reflectivity properties of the reflector. The back surface can be coated with a reflective layer. To compensate deviations or divergencies which result from using different wavelengths in cooperation with the retro-reflector, e.g. over a range of 500 nm to 1600 nm, at least one of the optical elements of the retro-reflector can be made of low-dispersion glass and an intermediate member can be arranged in the reflector design. This design can be built comparatively compact and less complex.

Accordingly, in one approach described here for the retro-reflector, low-dispersion glass can be used in the first step. In a further approach, the wavelength-dependent dispersion can (further) be reduced by the additional use of a diffractive element which is placed on the intermediate surface of two (low-dispersion) glass e.g. hemispheres. The invention thus proposes a retro-reflector which consists of only two glass hemispheres in a compact and inexpensive way, whereby achromaticity is made possible by low-dispersion glasses and/or with a diffractive element between the glass hemispheres.

The invention relates to a retro-reflector which comprises a front boundary surface configured for entry of measuring light into the retro-reflector and a back boundary surface configured for reflecting the measuring light as reflected measuring light.

The front boundary surface and the back boundary surface are arranged on opposite sides of the retro-reflector and an optical axis is defined by the arrangement of the front boundary surface and/or the back boundary surface of the retro-reflector, wherein an incidence angle of the measuring light relative to the optical axis is equal to an exit angle of the reflected measuring light relative to the optical axis. Hence, the propagation axes (directions) of the incoming measuring light and the exiting reflected measuring light are parallel. Since there may be an offset between the incoming and the reflected measuring light, respective incidence and exit angles at the curved front boundary surface may be different. However, the incidence angle and the exit angel with respect to optical axis are equal. In other words, the directions of measuring light and reflected light are diametrical.

The retro-reflector comprises a first optical element which comprises the front boundary surface, and a second optical element which comprises the back boundary surface. The front boundary surface and the back boundary surface are of curved shape. The first optical element and the second optical element are of different shape and/or size. The retro-reflector comprises an intermediate member arranged between the first optical element and the second optical element and the first optical element and the second optical element are connected to each other by means of the intermediate member. The intermediate member can for example be an adhesive like glue or optical cement.

The retro-reflector is configured so that the measuring light which enters into the retro-reflector at the front boundary surface is focussed at the back boundary surface (and in particular reflected back).

The measuring light preferably is provided as collimated laser light, in particular emitted by a measuring device like a surveying device (e.g. total station or laser scanner) or a metrology device (e.g. laser tracker). The laser light may be of one particular wavelength, e.g. having a wavelength of the visible spectrum VIS (e.g. 633 nm) or of the infrared spectrum IR. However, the wavelength of the measuring light depends on the measuring device used with the retro-reflector and, hence, varies accordingly from device to device.

In one embodiment, the first optical element and/or the second optical element can comprise low-dispersion glass, the low-dispersion glass comprises an Abbe number V > 80.

Low-dispersion glass is a type of glass with reduced chromatic aberration. The refractive index of the glass does not change as strongly with different wavelengths of light. In other words, the light passing through the glass has a smaller spread or dispersion between its constituent colors, resulting in a reduced "rainbow effect" at high-contrast edges. Wavelength dispersion in a certain material is characterized by its Abbe number V - the higher the Abbe number, the lower the wavelength dispersion in the material. Low-dispersion glass has a higher Abbe number than conventional types (e.g. crown glass).

In one embodiment, the first optical element and the second optical element can be made of the same material and have same Abbe numbers V. The use of low-dispersion glass for both of the optical elements further increases the insensitivity to wavelengths of the used measuring light.

According to one embodiment the front boundary surface can comprise a radius of curvature different from the radius of curvature of the back boundary surface, in particular wherein the radius of curvature of the front boundary surface is smaller than the radius of curvature of the back boundary surface.

In one embodiment, the front boundary surface and the back boundary surface can be of spherical shape. According to some embodiments, at least one of the boundary surfaces, the front and/or the back boundary surface may be spherically, ellipsoidally, paraboloidally or hyperboloidally formed.

In one embodiment, each of the two optical elements can comprise a centre point, in particular an optical or a geometric centre, and the optical elements are arranged so that the centre points of the optical elements coincide. By that, a monocentric distance between the front boundary surface and the back boundary surface is provided.

In one embodiment, the intermediate member can comprise or can consist of an adhesive, in particular optical cement.

In one embodiment, the intermediate member can comprise a diffractive structure, in particular a diffractive optical element. The intermediate member may be provided as a particular element which provides an intermediate layer. Alternatively, the intermediate member may be provided as an optical element integrated in one of the optical elements,

In particular, the intermediate member can comprise a first intermediate element which comprises lacquer, in particular wherein a shape or structure of the first intermediate element defines the diffractive structure. The lacquer can be optical lacquer which provides particular optical properties with view to transmissibility. As for example, lacquer which provides a refractive index of about 1.5 and sufficient transmissibility in the relevant wavelength region.

In one embodiment, the intermediate member can comprise a second intermediate element comprising optical cement. The optical cement provides particular optical properties with view to transmissibility. As for example, optical cement which provides a refractive index of about 1.7 and sufficient transmissibility in the relevant wavelength region of more than 99%.

In one embodiment, the first intermediate element can comprise a refractive index different from the refractive index of the second intermediate element.

According to one embodiment, the diffractive structure can comprise a blaze height h, wherein 3.5 µm < h < 15 µm. The blaze height is preferably adjusted according to the materials used for the first and the second intermediate element. In particular, the diffractive structure can be built and be provided with blaze height that is adapted to the refractive indices of the lacquer and the optical cement.

A plane that forms one side of the groove ruled on a diffraction grating can be called blaze. Blaze height typically refers to a parameter in the context of diffraction gratings, which are optical devices consisting of a series of closely spaced parallel grooves or slits. The blaze height can be a crucial characteristic of a diffraction grating and is associated with the profile of the grooves. The blaze height can represent the depth or height of the grooves on the grating. In a diffraction grating, light incident on the surface is diffracted as it interacts with the periodic structure of the grooves. The blaze height can be optimized to enhance the efficiency of diffraction at a specific wavelength or set of wavelengths. By designing the blaze height, the intensity of diffracted light at the desired spectral orders can be maximized. Selecting an appropriate blaze height can help to improve the performance of diffraction gratings in terms of dispersion, resolving power, and efficiency for specific wavelengths of interest.

The invention also relates to a method for providing a retro-reflector. The method comprises providing a first optical element with a first boundary surface of curved shape and a second boundary surface of planar shape and applying a layer of lacquer on the second boundary surface, the layer of lacquer is provided with defined thickness. The lacquer can provide a support structure to build the directive structure.

In a next step, a puncheon element (stamping tool) in pressed into the layer of lacquer, the puncheon element comprises a negative of a structure to be defined by means of the lacquer, wherein a depression of defined shape and size in the layer of lacquer is provided. The structure and the negative of the structure can preferably be a defined optical diffractive structure. The layer of lacquer is cured to provide a staple support (mold). Curing may be performed by use of ultraviolet light.

Now, optical cement is applied into the depression, in particular also on the layer of lacquer. By that, the optical cement flows into the provided negative structure and, thus, builds a respective (positive) structure. A diffractive structure, in particular a diffractive optical element, can be provided by the optical cement.

A second optical element with a third boundary surface of curved shape and a fourth boundary surface of planar shape is provided and the fourth boundary surface is arranged on side of the optical cement. This can be done before or after curing the optical cement. This means the optical cement can be cured after contacting with the fourth boundary surface and thus provides adhesion of both optical elements. Alternatively, the optical cement is first cured and the fourth boundary surface is connected with the intermediate member by use of an adhesive to provide fixed positioning of the optical elements. The intermediate member is provided by the layer of lacquer and the optical cement.

In one embodiment, a reflective layer can be provided on the first boundary surface and/or on the third boundary surface, wherein the reflective layer provides reflection of measuring light, in particular of measuring light having a wavelength out of the range between 600 nm and 1600 nm.

The invention also relates to a retro-reflector for determining a position and/or for marking a target point, in particular for industrial or geodetic surveying. The retro-reflector is obtained by executing any method of above.

The inventive aspects are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: illustrates a metrology system which makes use of a retro-reflector according to the invention;
- Fig. 2:: shows an exemplary embodiment of a retro-reflector according to the present invention;
- Figs. 3a-3b:: shows an exemplary embodiment of a retro-reflector according to the present invention;
- Fig. 4:: shows the optical characteristics of embodiments of retro-reflectors according to figures 2 and 3a with reference to a desired or required optical behavior; and
- Figs. 5a-5b:: exemplarily show an embodiment of a structure and an embodiment of a method of how to manufacture a retro-reflector according to the invention.

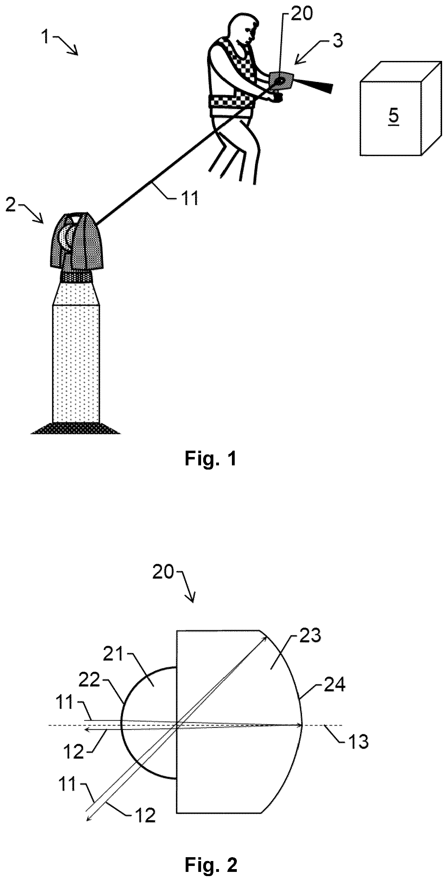

**Figure 1** exemplarily illustrates a metrology system 1 which makes use of a retro-reflector 20 according to the invention. The figure shows an exemplary use case, e.g. measuring and quality control of a work piece 5 e.g. in industrial automobile or aircraft production.

A typical metrology measurement system for determining 3D coordinates of an object 5 comprises a coordinate measuring device 2 with tracking functionality, in the following also referred to as a laser tracker, configured to automatically track a movable accessory device 3 and to generate coordinate measuring data indicative of the position, and often also the orientation, of the movable accessory device. For example, the tracking capability of the tracker may be provided by at least one of a video tracking unit, a radio frequency tracking unit, and by optical tracking based on emitting a tracking beam towards a cooperative target, i.e. a retro-reflector 20.

The movable accessory device 3 is configured for scanning the object 5, e.g. by means of tactile scanning, and/or laser-based scanning, and/or camera based scanning, and/or the movable accessory device is configured for carrying out an intervention on the object 5, e.g. for manufacturing and/or marking the object 5. For example, the movable accessory device 3 may be embodied as scanning device configured to approach the object and to carry out a coordinate measurement itself, e.g. wherein the mobile accessory device is a hand-held scanner 3. Alternatively, the device may be a tactile probing or scanning device, an articulated arm robot, an x-ray inspection device, or a stereo imaging device. The mobile accessory device may also be a marking device for marking the object or a tool and/or manufacturing instrument. Furthermore, the accessory device can also be a further laser tracker, e.g. a laser tracker configured to have a scanning functionality.

Metrology systems are often configured so that coordinate measuring data of accessory devices are typically referenceable to the coordinate system of one of the coordinate measuring devices, e.g. one of the fixed laser trackers, or to an outer coordinate system of a group of coordinate measuring devices.

By way of example, the movable accessory device 3 is embodied as a handheld scanner configured to emit a local scanning beam in order to scan the object surface in a local coordinate system, wherein the position of the handheld scanner 3 is tracked and measured by the laser tracker 2, and the measuring points of the handheld scanner 3, typically coordinate measuring data in a local coordinate system, are referenceable to the coordinate system of the laser tracker 2.

Both the movable accessory device 3 and the tracker 2 may also be mounted to a robot, e.g. a UGV ("unmanned ground vehicle") carrying a tracker 2 or a UAV ("unmanned aerial vehicle") carrying a sensor device and providing the movable accessory device 3.

By way of example, the tracker is embodied as an industrial laser tracker 2, which provides for high-precise coordinate measuring and tracking of a cooperative target 20 at the probe 3, e.g. a passive reflecting unit with defined reflecting properties of the retro-reflecting unit 20, wherein at least parts of a laser beam emitted by the laser tracker 2 are reflected back, e.g. in parallel, to the laser tracker. In other words: In the context of the present application, the term "cooperative target" relates to a target specifically foreseen to be used in conjunction with a tracking unit in order to enable generation of a tracking signal. Thus, the cooperative target "cooperates" with the tracking unit in that it has at least one of distinct reflection properties, distinct emission properties, a known shape, and known dimensions.

The basic structure of a typical laser tracker 2 comprises an opto-electronic distance meter to determine a distance to an object based on a laser measuring beam 11 (measuring light), wherein the aiming direction of the laser measuring beam 11 can be varied in a motorized movement, e.g. with respect to one or more independent spatial directions.

Opto-electronic laser distance meters have now become standard solutions in many areas, wherein various principles and methods are known in the field of electronic or electro-optical distance measurement. One approach is to use an interferometric distance measuring principle, particularly an absolute (i.e. frequency scanning) interferometry method, a frequency modulated continuous wave method (FMCW, particularly C-FMCW), the Fizeau principle, and/or a frequency comb principle.

Furthermore, the laser tracker 2 comprises a tracking unit for providing an automatic adjustment of the aiming direction of the laser measuring beam 11 such that the measuring beam 11 is continuously tracking a target point, wherein a direction of the emission of the laser measuring beam 11 is determined by means of sensors for angle measurement, e.g. angle encoders. As tracking sensor, a position-sensitive detector (PSD) may be used, e.g. an area sensor which functions in an analogue manner with respect to position, with the aid of which a centroid of a light distribution on the sensor surface can be determined.

The movable accessory device 3 comprises a cooperative target embodied as retro-reflector 20 according to the present invention.

**Figure 2** shows an exemplary embodiment of a retro-reflector 20 according to the present invention. The retro-reflector 20 comprises a first optical element 21 with a front boundary surface 22 and a second optical element 23 with a back boundary surface 24. The front boundary surface 22 and the back boundary surface 24 are of curved shapes. The first 21 and the second 23 optical element are connected to each other's. In the shown embodiment the first optical element 21 is a half-sphere and the second optical element 23 comprises a body with the back boundary surface 24 having the shape of a partial-sphere. In particular, the second optical element 23 is a part of a half-sphere or comprises a spherical cap. The first 21 and the second 23 optical element are glued together. Gluing is provided by an adhesive, e.g. a layer of optical cement between the first 21 and the second 23 optical element, which represents an intermediate member. The optical cement can be provided with defined thickness, e.g. having a thickness of 10 µm.

The front boundary surface 22 is configured for entry of measuring light 11 into the retro-reflector 20. The back boundary surface 24 is configured for reflecting the measuring light 11 as reflected measuring light 12. The back boundary surface 24 can be covered by a respectively reflecting layer. As can be seen, the front boundary surface 22 and the back boundary surface 24 are arranged on opposite sides of the retro-reflector 20.

An optical axis 13 is defined by the arrangement of the front boundary surface 22 and/or the back boundary surface 24. The incidence angle of the measuring light 11 relative to the optical axis 13 is equal to an exit angle of the related reflected measuring light 12 relative to the optical axis 13. The reflected measuring light 12 propagates parallel in opposite direction relative to the incident measuring light 11, i.e. basically diametrically.

The retro-reflector 20 is configured so that the measuring light 11 which enters into the retro-reflector 20 at the front boundary surface 22 is focussed at the back boundary surface 24, in particular the first 21 and the second 23 optical element are shaped respectively.

In the present embodiment, the first optical element 21 and the second optical element 23 comprise low-dispersion glass, the low-dispersion glass comprises an Abbe number V > 80. In another embodiment, at least one of the first optical element 21 and the second optical element 23 comprise low-dispersion glass.

By use of low-dispersion glass the retro-reflector 20 provides insensitivity concerning a wavelength of the measuring light 11 over a wide range of wavelengths. This means that the retro-reflector 20 still provides sufficient reflecting quality (e.g. related to intensity of reflected light, angular consistency, divergence of the reflected light beam etc.) for the reflected measuring light 12 even in case of different wavelengths used. This is still true for a measuring range (distance between laser tracker and retro-reflector) of up to 50 m or even more.

In the shown embodiment, each of the optical elements 21,23 defines a centre point, in particular an optical or a geometric centre, and the two optical elements are arranged so that the centre points of the two optical elements 21,23 coincide. Such a design provides that the chief ray from any field angle travels through the same centre point of a system. Hence, the focusing and retro-reflecting performance over the complete FOV (field of view) is constant thanks to the spherical symmetry.

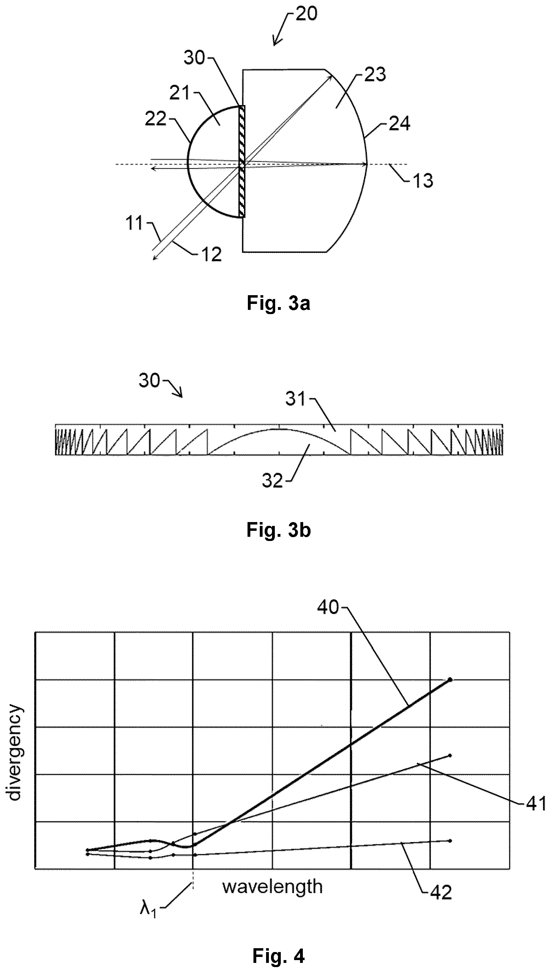

**Figure 3a** shows a further exemplary embodiment of a retro-reflector 20 according to the present invention. The retro-reflector 20 comprises a first optical element 21 with a front boundary surface 22 and a second optical element 23 with a back boundary surface 24. The front boundary surface 22 and the back boundary surface 24 are of curved shapes. In the shown embodiment the first optical element 21 is a half-sphere and the second optical element 23 comprises a body with the back boundary surface 24 having the shape of a partial-sphere. In particular, the second optical element 23 is a part of a half-sphere or comprises a spherical cap.

However, it is to be understood in context of the present invention that any other geometric body or geometrical shaped surface may be provided with the first and/or the second optical element, the boundary surface of which is curved.

The retro-reflector 20 further comprises an intermediate member 30 arranged between the first 21 and the second optical element 23. The intermediate member 30 comprises a diffractive structure. In the shown embodiment, the intermediate member comprises a diffractive optical element. In addition, the intermediate member 30 provides adhesion between the first optical element 21 and the second optical element 23.

The design and reflection characteristics of the retro-reflector 20 can be further improved by such arrangement of the intermediate member, i.e.by integrating a diffractive structure (DOE) between two glass half-shells. By that, the diffractive structure contributes or even takes over the wavelength correction. Here, the first 21 and/or the second optical element 23 can be manufactured of standard (optical) glasses (e.g. crown glasses).

In one embodiment, at least one of the first optical element 21 and the second optical element 23 comprises or is made from low-dispersion glass. This further improves the wavelength insensitivity of the retro-reflector 20.

The DOE provides a reduction in divergence, particularly at medium wavelengths, due to the wavelength dependence of its structure. This provides a corresponding design based on two glass hemispheres with a diffractive intermediate layer 30 over an extended wavelength range within required specification.

**Figure 3b** exemplarily shows an embodiment of the intermediate member 30 used in an embodiment of a retro-reflector according to the invention.

The intermediate member 30 comprises a first intermediate element 31 which comprises an optical lacquer and provides the diffractive structure. The intermediate member also comprises a second intermediate element 32 which comprises optical cement. The first intermediate element 31 and the second intermediate element 32 comprise (slight) difference in diffractive power.

The intermediate member 30 of the present embodiment comprises a blaze height of a range between 3.5 µm and 15 µm.

**Figure 4** exemplarily shows the optical characteristics of embodiments of retro-reflectors according to figures 2 and 3a with reference to a desired or required optical behaviour. The optical characteristics are shown with reference to divergency over wavelength.

The curve 40 represents the desired or required optical performance of a retro-reflector. Shown is the requirement of wavelength independence by a maximum permissible wavelength-dependent divergence of a retro-reflector at a maximum distance of up to 50 m, e.g. in cooperation with a laser tracker.

The performance of a retro-reflector according to figure 2 is shown with curve 41. As can be seen the retro-reflector according to figure 2 provides sufficient divergency behaviour over a wide range of wavelengths which suffice a for several typical applications. In other words, the reflector already provides sufficient characteristics, but shows slight deviations at medium wavelengths λ₁. This may lead to a reduction of the maximum measuring distance, e.g. from 50 m to approx. 35 m.

Further, curve 42 shows the optical performance of a retro-reflector according to figure 3a, i.e. a retro-reflector which comprises an intermediate member 30 with a DOE. The optical performance, i.e. the divergency over the range of wavelengths of interest, meets over the entire range the required wavelength independence criterion.

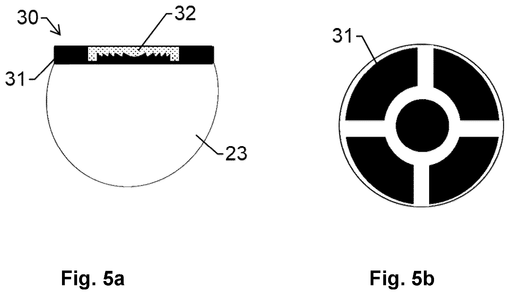

**Figure 5a and 5b** exemplarily show an embodiment of a structure and an embodiment of a method of how to manufacture a retro-reflector according to the invention. Here, the retro-reflector should be provided with an intermediate member 30 comprising a diffractive structure.

The exact realization of the correct thickness of the intermediate member and its component is critical. Tolerances here are in the micrometer range to provide exact and sufficient optical characteristics. To meet these requirements, first a so-called support structure, e.g. a layer of lacquer, is coated with defined thickness on the (second) optical element 23. The support structure represents the first intermediate element 31 (black areas in the figure).

It is to be understood that the step of coating the support structure may alternatively be applied with the other (first) optical element 21. The invention is not limited in either of these procedures.

As can be seen from **figure 5b**, an outer thick interrupted ring with the defined thickness (e.g. 30 µm height) is built to protect the DOE in the centre. This ring also has well defined layer thickness. The interruptions are provided in order to optimize subsequent material flow (of optical cement) and to remove air from the depressions.

Next, a stamping tool (puncheon element) is used to press a negative of a diffractive structure (DOE) to be provided by means of the lacquer. The structure of the DOE is pressed into the lacquer. Accordingly, a depression of defined shape and size in the support structure 31 (lacquer) is provided. In particular after curing the support structure, the depression is filled with optical cement 32 (dotted in the figure).

To provide a stable and precise diffractive structure the optical cement 32 is cured. This can be done before or after connecting the upper boundary layer of the intermediate member 30 with the other optical element. This means that the other optical element is connected to the supporting optical element 23 by means of the optical cement 32, i.e. glued by the optical cement 32, or there is used an additional adhesive to bind the optical elements together.

By applying the technique of stamping the diffractive structure into a layer of lacquer with defined outer thickness and having a precisely manufactured stamping tool, the diffractive structure can be built accurately with well-defined geometry and/or distance to at least one of the optical elements. As a result, such arrangement provides sufficient wavelength-sensitive correction of beam propagation in the retro-reflector.

Although the invention is illustrated above, partly with reference to some preferred embodiments, it must be understood that numerous modifications and combinations of different features of the embodiments can be made. All of these modifications lie within the scope of the appended claims.

## Claims

1. Retro-reflector (20) comprising
• a front boundary surface (22) configured for entry of measuring light (11) into the retro-reflector (20) and
• a back boundary surface (24) configured for reflecting the measuring light as reflected measuring light (12),
wherein
• the front boundary surface (22) and the back boundary surface (24) are arranged on opposite sides of the retro-reflector (20), and
• an optical axis (13) is defined by the arrangement of the front boundary surface (22) and/or the back boundary surface (24) of the retro-reflector (20), wherein an incidence angle of the measuring light (11) relative to the optical axis (13) is equal to an exit angle of the reflected measuring light (22) relative to the optical axis (13),
**characterised by**
• a first optical element (21) comprising the front boundary surface (22), and
• a second optical element (23) comprising the back boundary surface (24), wherein
• the front boundary surface (22) and the back boundary surface (24) are of curved shape,
• the first optical element (21) and the second optical element (23) are of different shape and/or size,
• the retro-reflector (20) comprises an intermediate member (30) arranged between the first optical element (21) and the second optical element (23),
• the first optical element (21) is connected to the second optical element (23) by means of the intermediate member (30), and
• the retro-reflector (20) is configured so that the measuring light (11) entering into the retro-reflector (20) at the front boundary surface (22) is focussed at the back boundary surface (24).

2. Retro-reflector (20) according to claim 1,
**characterized in that**
the first optical element (21) and/or the second optical element (23) comprise low-dispersion glass, the low-dispersion glass comprises an Abbe number V > 80.

3. Retro-reflector (20) according to claim 1 or 2,
**characterized in that**
the first optical element (21) and the second optical element (23) are made of the same material and have same Abbe numbers V.

4. Retro-reflector (20) according to any of the preceding claims,
**characterized in that**
the front boundary surface (22) comprises a radius of curvature different from the radius of curvature of the back boundary surface (24), in particular wherein the radius of curvature of the front boundary surface is smaller than the radius of curvature of the back boundary surface.

5. Retro-reflector (20) according to any of the preceding claims,
**characterized in that**
the front boundary surface (22) and the back boundary surface (24) are of spherical shape.

6. Retro-reflector (20) according to any of the preceding claims,
**characterized in that**
the first and the second optical element (21,23) have respective centre points and the first and the second optical element (21,23) are arranged so that the centre points of the first and the second optical element (21,23) coincide and a monocentric distance between the front boundary surface (22) and the back boundary surface (24) is provided.

7. Retro-reflector (20) according to any of the preceding claims,
**characterized in that**
the intermediate member (30) comprises or consists of an adhesive, in particular optical cement.

8. Retro-reflector (20) according to any of the preceding claims,
**characterized in that**
the intermediate member (30) comprises a diffractive structure, in particular a diffractive optical element.

9. Retro-reflector (20) according to any of the preceding claims,
**characterized in that**
the intermediate member (30) comprises a first intermediate element (31) comprising lacquer, in particular wherein a shape or structure of the first intermediate element (31) defines the diffractive structure.

10. Retro-reflector (20) according to any of the preceding claims,
**characterized in that**
the intermediate member (30) comprises a second intermediate element (32) comprising optical cement.

11. Retro-reflector (20) according to claim 10,
**characterized in that**
the first intermediate element (31) comprises a refractive index different from the refractive index of the second intermediate element (32).

12. Retro-reflector (20) according to any of the claims 8 to 11,
**characterized in that**
the diffractive structure comprises a blaze height h, wherein 3.5 µm < h < 15 µm

13. Method for providing a retro-reflector (20), the method comprises
• providing a first optical element (21) with a first boundary surface (22) of curved shape and a second boundary surface of planar shape,
• applying a layer of lacquer (31) on the second boundary surface, the layer of lacquer is provided with defined thickness,
• pressing a puncheon element into the layer of lacquer (31), the puncheon element comprises a negative of a structure to be provided by means of the lacquer, wherein a depression of defined shape and size in the layer of lacquer is provided,
• curing the layer of lacquer (31),
• applying optical cement (32) into the depression, in particular on the layer of lacquer,
• providing a second optical (23) element with a third boundary surface (24) of curved shape and a fourth boundary surface of planar shape,
• arranging the fourth boundary surface on side of the optical cement, and
• curing the optical cement (32),
wherein an intermediate member (30) is provided by the layer of lacquer (31) and the optical cement (32).

14. Method according to claim 13,
**characterised in that**
providing a reflective layer on the third boundary surface (24), wherein the reflective layer provides reflection of measuring light (11), in particular of measuring light having a wavelength out of the range between 600 nm and 1600 nm.

15. Retro-reflector (20) for determining a position and/or for marking a target point, in particular for industrial or geodetic surveying, obtained by executing the method according to claim 13 or 14.
